# EUROPÄISCHE PATENTSCHRIFT

(11) **EP 3 022 806 B1**
(45) Veröffentlichungstag und Bekanntmachung des Hinweises auf die Patenterteilung: **20.06.2018**
(21) Anmeldenummer: 14752569.5
(22) Anmeldetag: 17.07.2014
(51) Int. Cl.: H01R 9/05, H01R 13/6593, H02G 3/06, H02G 15/013, H01R 13/18, H02G 15/04, H01R 13/58, H01R 13/53

(54) **EINRICHTUNG UMFASSEND EIN GEHÄUSE UND EINE VORRICHTUNG ZUR ELEKTRISCHEN KONTAKTIERUNG EINER ABSCHIRMUNG EINES ELEKTRISCHEN KABELS**
ASSEMBLY COMPRISING A HOUSING AND A DEVICE FOR ELECTRICALLY CONTACT A SHIELDING OF AN ELECTRIC CABLE
ENSEMBLE COMPRENANT UN BOÎTIER ET UN DISPOSITIF DE CONTACT ÉLECTRIQUE D'UN BLINDAGE D'UN CÂBLE ÉLECTRIQUE

(30) Priorität: 17.07.2013 DE 202013006412 U
(43) Veröffentlichungstag der Anmeldung: 25.05.2016
(73) Patentinhaber: LEONI Bordnetz-Systeme GmbH, 97318 Kitzingen (DE)
(72) Erfinder: ALBERT, Volker, 97337 Dettelbach (DE); DEHN, Christian, 90518 Altdorf (DE); KETT, Alexander, 92706 Luhe-Wildenau (DE); PIECZKA, Michael, 58644 Iserlohn (DE)
(74) Vertreter: FDST Patentanwälte
(86) Internationale Anmeldenummer: PCT/EP2014/065363
(87) Internationale Veröffentlichungsnummer: WO 2015/007836

(56) Entgegenhaltungen:
- EP-A1- 0 421 373
- EP-A1- 2 410 620
- WO-A1-2010/131772
- WO-A1-2012/069865
- US-B1- 8 011 958

## Beschreibung

Die Erfindung betrifft eine Einrichtung umfassend ein Gehäuse und eine Vorrichtung zur elektrischen Kontaktierung einer Abschirmung eines elektrischen Kabels an einem Gehäuse.

Die Erfindung betrifft dabei insbesondere eine derartige Einrichtung umfassend ein Gehäuse, eine Vorrichtung und ein derartiges Kabel zum Einsatz in einem Elektro- oder Hybridfahrzeug als Hochvolt-Kabel zur Leistungsversorgung von elektrischen Hochvolt-Verbrauchern wie beispielsweise einen elektrischen Fahrmotor. Bei derartigen Hochvolt-Kabeln ist eine Abschirmung erforderlich, um die übrige Bordnetz-Elektronik frei von Störeinflüssen zu halten. Unter "Hochvolt" wird hierbei ein Spannungsbereich von typischerweise etwa 300V bis 800V verstanden.
Die Hochvolt-Kabel verbinden dabei eine Strom- und Spannungsquelle, insbesondere einen Akkumulator oder einen Generator mit einem Verbraucher, beispielsweise der elektrische Fahrmotor. Beim Anschluss des Kabels an der jeweiligen Komponente muss die Abschirmung des Kabels zuverlässig und sicher mit dem Gehäuse der jeweiligen Komponente elektrisch verbunden werden, um eine durchgehende Abschirmung zu erreichen. Dabei soll möglichst auch eine einfache, vorzugsweise reversible Montage des Kabels an der Komponente ermöglicht sein. Darüber hinaus muss in die Anschlussstelle zwischen Kabel und Komponente auch eine Zugentlastung integriert sein. Trotz einer gewünschten reversiblen Lösbarkeit des Kabels am Gehäuse ist eine sichere und langfristig zuverlässige Schirmanbindung gefordert. Heute bekannte Systeme zur Schirmanbindung sind im Allgemeinen vergleichsweise aufwendig. Beispielsweise erfolgen diese über eine Kabelverschraubung.
Aus der WO 2010/131772 A1 ist ein geschirmtes Hochvolt Kabel zu entnehmen, welches eine Art Anschlussarmatur aufweist, mit dem es beispielsweise mit einem Inverter verbunden wird. Die Anschlussarmatur wird beispielsweise über eine Schraubbefestigung an einer Komponente befestigt, so dass eine Kontaktierung der Schirmung des Kabels erfolgt. Die Schirmung wird dabei zwischen einer stutzenförmigen Hülse der Anschlussarmatur und einem Klemmring eingeklemmt. Weiterhin sind Stecker für Kabel bekannt, bei denen eine Kontaktierung eines Kabelschirms im Stecker erfolgt. Beispiele hierfür sind zu entnehmen aus EP 2 410 620 A1, EP 0421 373 B1 oder WO 2012/069865 A1
Ausgehend hiervon liegt der Erfindung die Aufgabe zugrunde, eine Schirmkontaktierung zu ermöglichen, die diesen Anforderungen genügt.

Die Aufgabe wird gemäß der Erfindung gelöst durch eine Einrichtung umfassend ein Gehäuse und eine Vorrichtung zur elektrischen Kontaktierung einer Abschirmung eines elektrischen Kabels am Gehäuse mit den Merkmalen des Anspruchs 1. Das Kabel weist eine von einem Kabelmantel umgebene Abschirmung auf und ist im montierten Zustand durch einen Kabeleingang des Gehäuses in dessen Innenraum eingeführt, wobei im Innenraum das Kabel zwischen einem Kontaktbügel und einem Widerlager geklemmt ist und die Abschirmung hierbei zwischen einer Stützhülse und dem Kontaktbügel geklemmt ist.
Durch die Kontaktierung der Abschirmung über den insbesondere im Gehäuse im Innenraum inneneinliegenden Kontaktbügel ist eine einfache, montagefreundliche und zugleich effektive Schirmanbindung erzielt. Bei der Montage wird dabei das Kabel durch den Kabeleingang in das Gehäuse eingeführt, bevor anschließend mittels des Kontaktbügels ein vom Kabelmantel befreiter Teilbereich zur elektrischen Kontaktierung der Abschirmung geklemmt wird. Durch das nachträgliche Anbringen des etwa halbschalenartig ausgebildeten Kontaktbügels im Inneren des Gehäuses entfällt ein ansonsten üblicher Klemm- oder Crimpprozess, mit dem eine Verbindung der Abschirmung zu einem Kontaktelement hergestellt wird. Die Montage ist dadurch vereinfacht. Zur Befestigung des Kontaktbügels wird dabei vorzugsweise auf übliche bei der Montage sowieso verwendete Befestigungsvorgänge, wie beispielsweise Schraubvorgänge zurückgegriffen.

Weiterhin weist der Kontaktbügel dabei in Kabellängsrichtung betrachtet zwei voneinander beabstandete Bügelabschnitte auf, nämlich einerseits einen Kontaktabschnitt, in dem die Abschirmung geklemmt ist sowie weiterhin einen Zugentlastungsabschnitt, in dem der Außenmantel geklemmt ist. Der Kontaktbügel überdeckt daher mit einem Teilbereich sowohl den Außenmantel des Kabels als auch mit dem weiteren Teilbereich den vom Kabelmantel freigelegten Bereich, in dem die Abschirmung zugänglich ist. Alternativ besteht auch die Möglichkeit, dass in dem Kontaktabschnitt die Abschirmung um den Kabelmantel umgeschlagen ist. Die Stützhülse wirkt allgemein als Stütz- oder Widerlager für die von dem Kontaktbügel aufgebrachte Klemmkraft.

Durch die Ausbildung mit zwei Bügelabschnitten und den unterschiedlichen Funktionen wird daher mit nur einem Element und nur einem Montagevorgang sowohl eine effektive Schirmanbindung als auch eine effektive Zugentlastung durch eine einzige Klemmung erreicht.

Vorzugsweise sind dabei die beiden Bügelabschnitte durch einen Schlitz voneinander getrennt, so dass für die beiden Abschnitte unterschiedliche Eigenschaften einstellbar sind und die beiden Funktionen, nämlich Schirmanbindung sowie Zugentlastung, möglichst optimal umgesetzt werden können.

Vorzugsweise ist hierzu vorgesehen, dass die beiden Bügelabschnitte unterschiedliche Radien aufweisen. Hierdurch wird berücksichtigt, dass im Bereich der Kontaktierung der Abschirmung und im Bereich der Zugentlastung das Kabel typischerweise unterschiedliche Radien oder Durchmesser aufweist. Durch die unterschiedlichen Radien der verschiedenen Abschnitte wird daher gewährleistet, dass in beiden Funktionszonen eine zuverlässige und ausreichende Klemmkraft ausgeübt wird.

Das Widerlager, gegen das der Kontaktbügel das Kabel einklemmt, ist gemäß einer bevorzugten Variante durch das Gehäuse selbst ausgebildet. Dieses weist hierzu insbesondere eine halbschalenartige Aufnahme auf, in die das Kabel eingelegt ist. Dieses Widerlager schließt sich dabei vorzugsweise unmittelbar an den Kabeleingang als Fortsetzung desselben an, die halbschalenartige Aufnahme des Widerlagers fluchtet daher vorzugsweise mit einem Öffnungsrand des Kabeleingangs.

In einer bevorzugten alternativen Ausgestaltung ist das Widerlager durch einen separaten Gegenbügel gebildet, wobei die beiden Bügel das Kabel nach Art einer Schelle umgeben und zwischen sich einklemmen. Die beiden Bügel liegen dabei mit abgekröpften Randbereichen aufeinander auf und sind in diesen Randbereichen vorzugsweise mit dem Gehäuse beispielsweise über eine Schraubverbindung verbunden, so dass eine elektrische Anbindung an das Gehäuse erfolgt.

Aufgrund eines notwendigen Einführspiels verbleibt zwischen dem Kabel und dem Kabeleingang ein Luftspalt, welcher im Hinblick auf eine effektive EMV-Abschirmung unter Umständen nachteilig sein könnte. Um derartige EMV-Störeffekte zu vermeiden, ist daher zweckdienlicherweise zumindest ein Ringsegment um den Kabeleingang zur elektrischen Abschirmung eines solchen Spaltes angeordnet.

Im Hinblick auf eine möglichst einfache und kostengünstige Ausgestaltung ist dabei das Ringsegment als ein Teilstück des Kontaktbügels selbst ausgebildet. Bei dem Kontaktbügel handelt es sich insbesondere um ein Blech (Stanz-) Biegeteil, so dass auch das Ringsegment durch einen einfachen Formgebungsvorgang hergestellt ist.

Zweckdienlicherweise umfasst dabei das Ringsegment mehrere insbesondere federnde Kontaktzungen, die umlaufend um den Kabeleingang, zumindest im von dem Ringsegment überdeckten Teilbereich, am Gehäuse anliegen. Die einzelnen Kontaktzungen sind dabei vorzugsweise in etwa kranzförmig angeordnet. Sie schließen sich in Kabellängsrichtung an einem der Bügelabschnitte an, und zwar dem der Gehäusewand zugeordneten Bügelabschnitte sie sind radial nach außen aufgebogen und sie liegen federnd an der Gehäuseinnenwand um den Kabeleingang an. Dadurch ist eine effektive, vollständig umlaufende Abschirmung des Spaltes verwirklicht.

Bei der ersten Ausführungsvariante, bei der das Widerlager durch eine Gehäuseschale des Gehäuses selbst gebildet ist, überdeckt das Ringsegment insbesondere lediglich eine obere Hälfte des Kabeleingangs entsprechend einem etwa 180°-Bogen des Kontaktbügels. Bei der zweiten Ausführungsvariante, bei der das Kabel zwischen dem Kontaktbügel und einem Gegenbügel nach Art einer Schelle gehalten ist, weist vorzugsweise der Gegenbügel ebenfalls ein derartiges Ringsegment auf, welches sich mit dem Ringsegment des Kontaktbügels zu einem Vollring ergänzt, welcher sich vollständig um den Kabeleingang umlaufend an die Gehäuseinnenwand anlehnt.

Zur weitergehenden Zugentlastung ist in zweckdienlicher Weiterbildung am Widerlager zumindest eine senkrecht zur Kabellängsrichtung orientierte Rippe ausgebildet, die in den Kabelmantel eingepresst ist. Hierdurch wird ein zusätzlicher Formschluss zwischen dem Widerlager und dem Außenmantel des Kabels ausgebildet. Ergänzend oder alternativ ist eine derartige quer verlaufende Rippe auch am Kontaktbügel ausgebildet.

Aufgrund der beiden Funktionszonen, nämlich die Kontaktzone und die Zugentlastungszone mit den unterschiedlich ausgestalteten Bügelabschnitten ist eine definierte Ausrichtung des Kontaktbügels erforderlich. Um diese montagetechnisch zu gewährleisten ist allgemein eine Kodierung vorgesehen. Insbesondere ist dabei der Kontaktbügel asymmetrisch ausgebildet, so dass ein Kodierelement, beispielsweise in Form einer Ausnehmung oder einer Nase gebildet ist. Korrespondierend hierzu weist auch das Gehäuse ein komplementäres Kodierelement, beispielsweise eine Nase oder Ausnehmung auf, um eine positionsrichtige Montage des Kontaktbügels zu gewährleisten.

Wie bereits erwähnt wird der Kontaktbügel zweckdienlicherweise über Schrauben befestigt. Diese sind dabei insbesondere als gewindefurchende Schrauben ausgebildet, so dass keine Schraubgewinde eingearbeitet werden müssen.

Um eine zuverlässige Einführung und Befestigung des Kabels in das Gehäuse zu gewährleisten, ist das Kabel außenseitig des Gehäuses von einer Verschlusskappe umgeben, über die insbesondere auch eine abgedichtete Einführung des Kabels in das Gehäuse erfolgt. Über die Verschlusskappe erfolgt dabei insbesondere auch eine mechanische Befestigung des Kabels am Gehäuse. Hierzu ist die Verschlusskappe einerseits am Kabel zumindest fixiert oder befestigt und andererseits am Gehäuse befestigt.
Die Verschlusskappe ist auf einen Kabelstutzen des Gehäuses aufgesetzt, umgibt diesen daher hülsenförmig. Die Befestigung der Verschlusskappe am Gehäuse erfolgt dabei vorzugsweise werkzeuglos und/oder insbesondere durch eine einfache Verrastung. Eine aufwendige Montage ist daher nicht erforderlich. Zweckdienlicherweise ist die Befestigung dabei reversibel lösbar ausgebildet.
Im Hinblick auf eine zuverlässig abgedichtete Einführung des Kabels in das Gehäuseinnere ist weiterhin zwischen dem Kabeleingang und dem Kabelmantel ein Dichtelement angeordnet, welches den Eintritt beispielsweise von Feuchtigkeit in den Innenraum des Gehäuses vermeidet. Insbesondere ist hierbei das Dichtelement zwischen dem Außenmantel des Kabels sowie der Innenseite des Kabelstutzens eingeklemmt. Das Dichtelement wird dabei von der insbesondere etwa topfförmigen Verschlusskappe gehalten und beim Durchführen des Kabels durch den Kabeleingang in den Kabelstutzen eingepresst.
Ein Ausführungsbeispiel der Erfindung wird nachfolgend anhand der Figuren näher erläutert. Diese zeigen jeweils in teilweise schematischen Darstellungen:
- FIG 1: eine perspektivische ausschnittsweise Darstellung einer Einrichtung umfassend ein Gehäuse und eine Vorrichtung zur elektrischen Kontaktierung einer Abschirmung eines Kabels,
- FIG 2: eine ausschnittsweise Längsschnitt-Darstellung der Einrichtung gemäß FIG 1,
- FIG 3: eine perspektivische ausschnittsweise Darstellung einer Einrichtungin einer alternativen Ausgestaltung,
- FIG 4: eine ausschnittsweise perspektivische Darstellung einer weiteren Ausführungsvariante,
- FIG 5A, 5B: ein Kabel mit mehreren Elementen zur Ausbildung der in der FIG 1 dargestellten Vorrichtung zur Erläuterung der einzelnen Montageschritte.

In den Figuren sind gleichwirkende Teile mit den gleichen Bezugszeichen dargestellt.

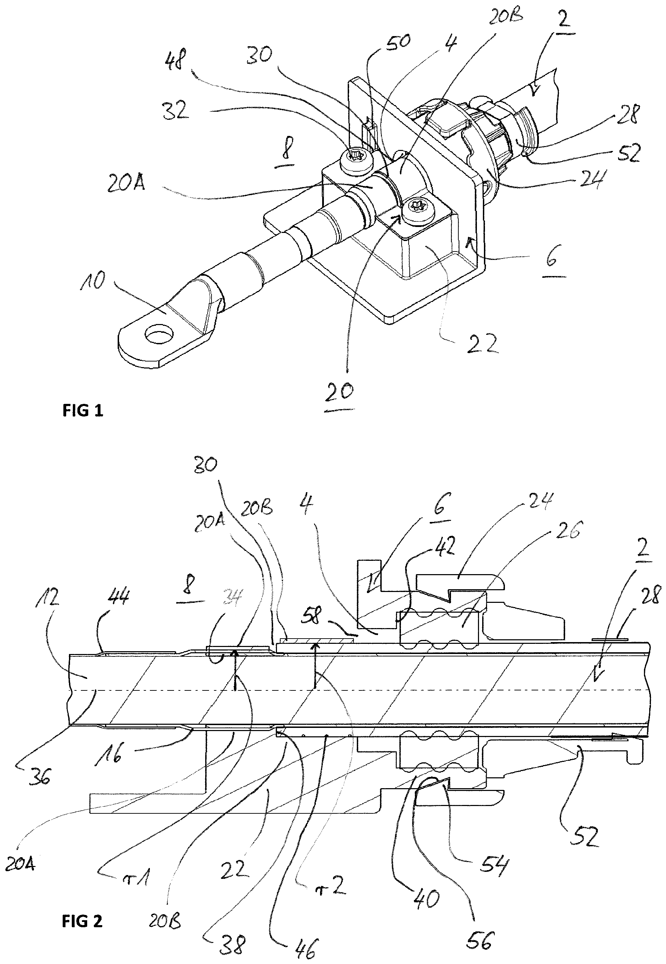

Gemäß FIG 1 ist ein elektrisches Hochvolt-Kabel 2 durch einen Kabeleingang 4 eines Gehäuses 6 in dessen Innenraum 8 eingeführt. Das Gehäuse 6 wird in der FIG 1 lediglich durch einen L-Winkel repräsentiert.

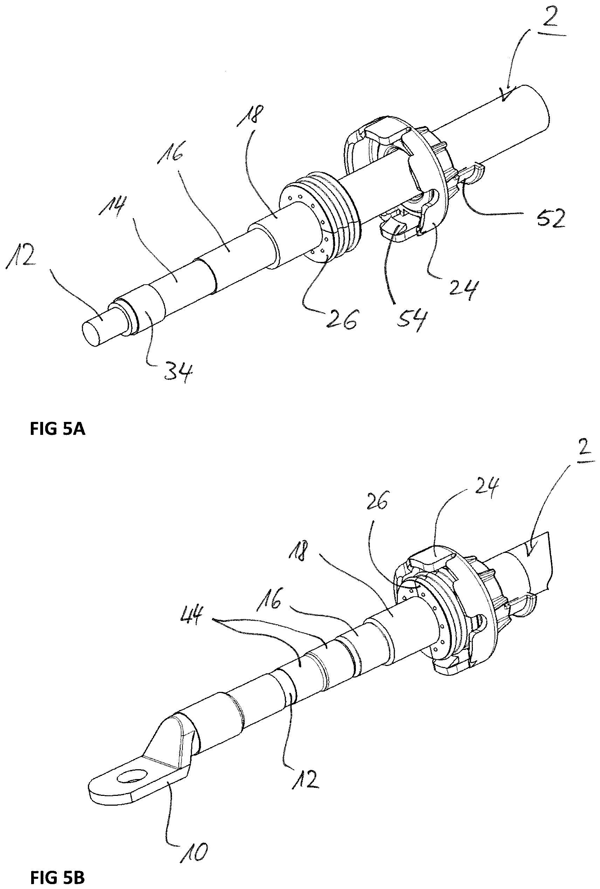

Das Kabel endet im Innenraum 8 an einem Kontaktelement 10, welcher insbesondere als Kontaktschuh ausgebildet ist und mit einer Leitungsader 12 des Kabels 2 elektrisch leitend beispielsweise Löten und/oder Klemmen/Crimpen verbunden ist. Das Kontaktelement 10 wird beispielsweise durch über eine Schraubverbindung an einem Kontaktpol im Innenraum 8 angeschlossen. Bei dem Gehäuse handelt es sich insbesondere um ein Metallgehäuse, beispielsweise ein Metallguss-Gehäuse, vorzugsweise ein Aluminium-Druck-Gehäuse. Innerhalb des Gehäuses sind elektrische Hochvolt-Komponenten angeordnet, die über das Kabel 2 versorgt werden. Die Einrichtung ist bestimmungsgemäß in einem Kraftfahrzeug mit Elektro- oder Hybridantrieb angeordnet. Das Kabel 2 ist als Hochvolt-Kabel zur Versorgung der elektrischen Hochvolt-Komponente ausgebildet.
Wie insbesondere aus FIG 2 sowie der Figuren 5a, 5B zu entnehmen ist, weist das Kabel 2 neben der zentralen, beispielsweise als Litzenleiter ausgebildeten Leiterader 12 eine diese umgebende Aderisolierung 14 und eine diese wiederum umgebende Abschirmung 16 auf, welche schließlich durch einen äußeren Kabelmantel 18 umgeben ist. Bei der Abschirmung 16 handelt es sich üblicherweise um ein Schirmgeflecht aus einer Vielzahl von metallischen Einzeldrähten.
Wie insbesondere aus der FIG 2 zu entnehmen ist, weist die Vorrichtung zur elektrischen Verbindung der Abschirmung 16 mit dem Gehäuse 6 einen Kontaktbügel 20, ein Widerlager 22, eine Verschlusskappe 24, ein Dichtelement 26 sowie ein Fixierelement 28 und Schrauben 32 auf. Weitere eigenständige Teile sind vorzugsweise nicht vorgesehen. Insbesondere ist daher nur eine geringe Teileanzahl erforderlich.
Der Kontaktbügel 20 weist im Ausführungsbeispiel der FIG 1 und 2 einen vorderen, zum Kontaktelement 10 gerichteten Kontaktabschnitt 20A sowie einen in Kabellängsrichtung unter Freilassung eines Schlitzes 30 einen Zugentlastungsabschnitt 20B auf. Die beiden Abschnitte 20A, 20B sind als halbkreisförmige Halbschalen ausgebildet und gehen beidseitig jeweils in eine etwa horizontal verlaufende gemeinsame Befestigungslasche über. Mit Hilfe der Schrauben 32 ist der Kontaktbügel 20 am Widerlager 22 befestigt, so dass das Kabel 2 zwischen dem Kontaktbügel 20 und dem Widerlager 22 eingeklemmt ist.

Das Widerlager 22 ist im Ausführungsbeispiel der FIG 1 als Teil des Gehäuses 6 ausgebildet und definiert ebenfalls eine in etwa halbschalenartige Aufnahme, in der das Kabel 2 einliegt.

Im Ausführungsbeispiel ist im Bereich des Kontaktabschnitts 20A der Kabelmantel 18 entfernt, so dass die Abschirmung 16 freigelegt ist. Unter die Abschirmung 16 ist eine Stützhülse 34 als Gegenlager für die von dem Kontaktbügel 20 aufgebrachten Klemmkräfte geschoben. Die Abschirmung 16 ist zwischen dem Kontaktbügel 20 und der Stützhülse 34 bzw. zwischen dem Widerlager 22 und der Stützhülse 34 eingeklemmt.

Alternativ hierzu besteht auch die Möglichkeit, dass die Abschirmung 16 im Kontaktabschnitt 20A um den Kabelmantel 18 umgeschlagen wird. In diesem Fall ist dann die Stützhülse 34 zuvor außenseitig auf den Kabelmantel 18 aufgeschoben worden.

Im Bereich des Kontaktabschnitts 20A sowie im Bereich des Zugentlastungsabschnitts 20B sind unterschiedliche Radien oder Durchmesser ausgebildet. Entsprechend weist auch der Kontaktabschnitt 20A einen geringeren Radius r1, also einen geringeren Abstand zu einer Mittenlängsachse 36 des Kabels 2 auf als der Zugentlastungsabschnitt 20B, welcher einen Radius r2 aufweist.

Korrespondierend zu diesen unterschiedlichen Abständen zu der Mittenlängsachse 36 weist das Widerlager 22 eine gestufte Ausgestaltung auf. Das Widerlager 22 geht daher in Kabellängsrichtung ebenfalls von einem Kontaktabschnitt 20A unter Ausbildung einer Stufe in einen Zugentlastungsabschnitt 20B über. Diese Stufe definiert zugleich auch einen Axialanschlag 38, bis zu dem das Kabel 2 durch den Kabeleingang 4 eingeschoben wird. In Richtung zum Kabeleingang 4 schließt sich an den Zugentlastungsabschnitt 20B des Gehäuses die Öffnung des Kabeleingangs 4 an. An diesen schließt sich schließlich außenseitig des Gehäuses 6 ein Kabelstutzen 40 an, welcher jedoch im Vergleich zu der Eintrittsöffnung einen vergrößerten Durchmesser aufweist, so dass hier ein zweiter Anschlag 42 ausgebildet ist. Gegen diesen kann das Dichtelement 26 zum Anliegen kommen.

Im Ausführungsbeispiel der FIG 2 ist die freigelegte Abschirmung 16 endseitig noch mit Hilfe eines Bandes 44 fixiert.
Im Bereich des Zugentlastungsabschnittes 20B sind am Widerlager 22 ergänzend noch Rippen 46 angeformt, die in den Kabelmantel 18 zur weiteren Zugentlastung eingepresst sind.

Aufgrund dieser unterschiedlichen Ausgestaltungen der beiden Bügelabschnitte 20A, 20B ist eine definierte Positionierung des Kontaktbügels 20 erforderlich. Um diese zu gewährleisten ist der Kontaktbügel 20 zur Ausbildung einer Kodierung asymmetrisch ausgebildet und weist an einer Seite eine Kodierausnehmung 48 auf, die zusammen mit einer Kodierrippe 50 am Gehäuse 6 die Kodierfunktion ausübt.

Außerhalb des Gehäuses 6 ist auf das Kabel 2 die etwa topfförmig ausgebildete Verschlusskappe 24 aufgeschoben. Sie weist einen halbschalenartig ausgebildeten Haltesteg 52 auf, welcher sich in Kabellängsrichtung erstreckt. Das insbesondere nach Art eines Kabelbinders ausgebildete Fixierelement 28 ist um den Haltesteg und das Kabel 2 umgelegt, so dass das Kabel 2 über dieses Fixierelement 28 an der Verschlusskappe 24 mechanisch fixiert ist. Die Verschlusskappe 24 weist eine zylindrische Kappenwand sowie einen Ringboden auf. Die Verschlusskappe 24 ist im Ausführungsbeispiel am Gehäuse 6 durch Verrasten befestigt. Hierzu ist eine Schnappverbindung zwischen der Kappenwand und dem Kabelstutzen 40 ausgebildet. Hierzu weist die Kappenwand eine Rastnase 54 auf, die in eine Rastausnehmung 56 des Kabelstutzens 40 eingerastet ist. Bei der Rastnase 54 handelt es sich um einen elastischen Teilbereich der Kappenwand, die durch Schlitze von der restlichen Kappenwand getrennt ist.

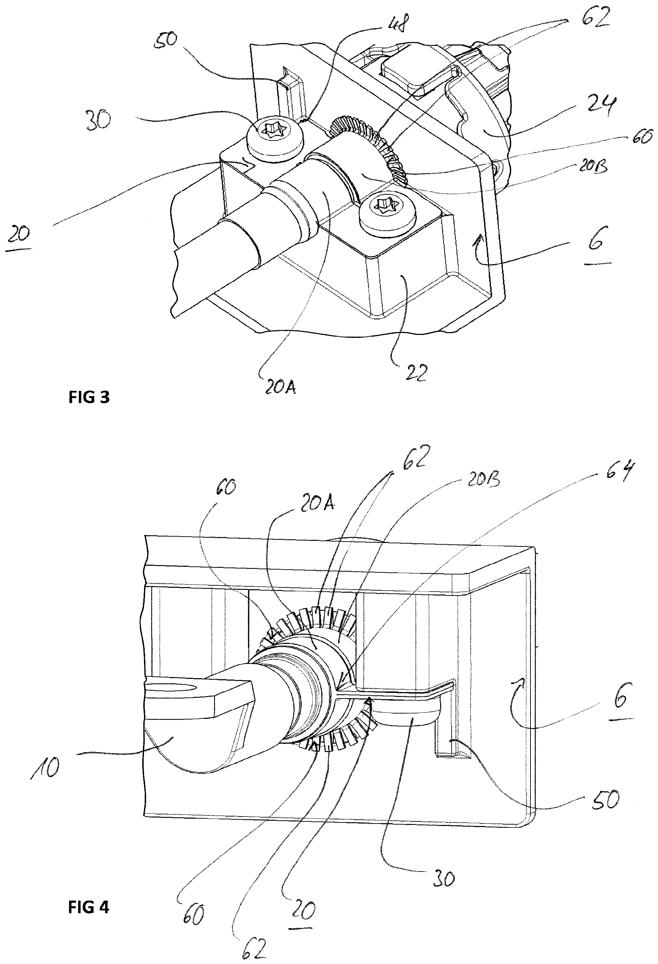

Während bei der Ausführungsvariante gemäß den FIG 1 und 2 das Kabel 2 zum Widerlager 22 im Bereich des Kabeleingangs 4 abgeschlossen aufliegt, ist in der oberen Hälfte im Bereich des Kontaktbügels 20 ein verbleibender Spalt 58 gebildet. Gemäß der Abwandlung nach FIG 3 ist dieser Spalt durch ein Ringsegment 60 überdeckt, um auch für diesen Bereich eine effektive EMV-Abschirmung zu gewährleisten.

Das Ringsegment 60 ist dabei unmittelbar am Kontaktbügel 20 und zwar am Zugentlastungsabschnitt 20B angeformt. Das Ringsegment 60 ist durch einen halbringförmigen Kranz gebildet und weist eine Vielzahl von einzelnen elastischen, radial nach außen gebogenen Kontaktzungen auf. Diese liegen elastisch an der Gehäusewand an.

Bei der Ausführungsvariante gemäß der FIG 4 ist zunächst - in Abweichung zu der Ausgestaltung des Widerlagers 22 durch das Gehäuse 6 selbst - ein Gegenbügel 64 angeordnet, welcher zusammen mit dem Kontaktbügel 20 eine Art Schelle bildet, über die das Kabel 2 geklemmt ist. Die beiden Bügel 20, 64 sind dabei vorzugsweise als Gleichteile identisch ausgebildet. Insbesondere weist der Gegenbügel 64 ebenfalls einen Kontaktabschnitt 20A sowie einen Zugentlastungsabschnitt 20B auf. Die beiden Bügel 20, 24 werden gemeinsam über die Schrauben 32 an einem entsprechenden Gehäusesteg befestigt. In diese sind lediglich vorgebohrte Löcher eingebracht. Bei den Schrauben 32 handelt es sich allgemein um selbstfurchende Schrauben. Im Ausführungsbeispiel der FIG 4 weisen beide Bügel 20, 64 etwa 180° umlaufende Ringsegmente 60 auf, die sich zu einem Vollring ergänzen.

Die Montage der einzelnen Elemente und die Vorbereitung des Kabels 2, also dessen Vorkonfektionierung wird nunmehr anhand der FIG 5A und 5B näher erläutert: Zunächst wird das Kabel 2 endseitig abgemantelt und die Abschirmung 16 wird auf die gewünschte Länge abgeschnitten. Endseitig ist daher die Leiterader 12 freigelegt. Anschließend wird die Verschlusskappe 24 sowie das Dichtelement 26 aufgeschoben. Danach wird die Stützhülse 34 auf die Aderisolierung aufgeschoben. Diese Zwischenmontageposition zeigt FIG 5A.
Weiterhin wird die Stützhülse 34 nach Art einer Unterziehhülse unter die Abschirmung 16 bis zu einem durch den verbleibenden Kabelmantel 18 gebildeten Anschlag untergezogen. Die Abschirmung 16 wird dann mit Hilfe des Bandes 44 fixiert, wodurch zugleich auch die Stützhülse 34 in ihrer Position fixiert ist. Schließlich wird noch das Kontaktelement 10 auf die freigelegte Leitungsader 12 aufgeschoben und mit dieser insbesondere durch Crimpen verbunden.

Das so vorbereitete Kabel 2 wird anschließend durch den Kabeleingang bis zum Axialanschlag 38 eingeführt, bis also der Kabelmantel 18 am Axialanschlag 38 zum Anliegen kommt. Der Kontaktbügel 20, welcher vorzugsweise in einer vormontierten Stellung bereits mittels der Schrauben 32 am Widerlager 22 fixiert war, wird dann gegen das Kabel 2 verschraubt. Dadurch ist das Kabel 2 bereits über die Zugentlastung in einer definierten Position gehalten. Anschließend wird das Dichtelement 26 in den Kabelstutzen 40 eingeschoben, wobei hierbei insbesondere durch die umlaufenden Dichtrippen des Dichtelements 26 eine sichere Abdichtung erzielt wird. Danach wird die Verschlusskappe 24 über den Kabelstutzen 40 geschoben, bis sie mit diesem verrastet. Schließlich erfolgt noch die Befestigung des Fixierelements 28 und die Verschraubung des Kontaktelements 10 an einem entsprechenden Kontaktpol.

Bei der Leiterader 12 handelt es sich vorzugsweise um eine Kupfer- oder auch Aluminiumlitze. Bei dem Kontaktbügel 20 handelt es sich vorzugsweise um einen Kupfer-Werkstoff mit Federeigenschaften. Die Oberfläche ist vorzugsweise verzinnt. Die Stutzhülse 34 weist in erster Linie eine mechanische Stützfunktion auf. Sie hat keine elektrische Funktion. Von daher ist sie beispielsweise als Messinghülse ausgebildet. Bei den Schrauben 32 werden vorzugsweise die identischen Schrauben eingesetzt, wie sie auch für eine Deckelverschraubung des Gehäuses 6 verwendet werden, um möglichst wenig unterschiedliche Teile zu benötigen. Bei dem Dichtelement 26 handelt es sich insbesondere um eine Silikondichtung und die Verschlusskappe 24 ist ein Kunststoffelement, beispielsweise aus Polyamid. Bei dem Fixierelement 28 handelt es sich ebenfalls entweder um ein Kunststoffelement beispielsweise aus Polyamid oder auch um ein Klemmelement aus Metall, beispielsweise Edelstahl.
Insgesamt ist durch die hier beschriebene Vorrichtung zunächst eine sehr einfache Konfektionierung des Kabels 2 ermöglicht. Es sind keinerlei Klemmvorgänge wie beispielsweis Crimpen etc. oder auch Lötvorgänge erforderlich und auch nicht vorgesehen. Durch das Verschrauben des Kontaktbügels 20 ist insgesamt ein nur geringer Übergangswiderstand gebildet, so dass eine gute Anbindung der Abschirmung 16 erreicht ist. Aufgrund der identischen Schrauben 32, wie sie auch für die Deckelverschraubung eingesetzt werden, ist ein Werkzeugwechsel nicht erforderlich. Insgesamt weist die gesamte Vorrichtung vergleichsweise wenig Einzelteile auf und ist dadurch insgesamt kompakt ausgebildet. Durch die Einklemmung der Abschirmung 16 zwischen dem halbschalenförmigen Kontaktbügel 20 sowie dem ebenfalls halbschalenförmigen Widerlager 22 ist insgesamt eine nahezu durchgängige 360°-Kontaktierung erreicht. Über die Zugentlastungsabschnitte 20B insbesondere auch in Kombination mit dem Fixierelement 28 ist eine zuverlässige Zugentlastung geschaffen. Über die werkzeuglose Verbindung zwischen Verschlusskappe 24 und Gehäuse 6 ist eine lösbare Verbindung geschaffen. Schließlich ist durch das Ringsegment 60 eine zuverlässige EMV-dichte Anbindung des Kabels am Gehäuse 6 auch im Bereich des Spaltes 58 gewährleistet. Bei der Ausführungsvariante gemäß der FIG 4, also bei der Verwendung des Gegenbügels 64, wird der Vorteil einer weiteren Verringerung des Übergangswiderstandes erzielt. Dies wird insbesondere erreicht aufgrund der Verwendung eines Kupferwerkstoffes für den Gegenbügel 64 im Vergleich zu dem üblicherweise eingesetzten Aluminium-Druckgussmaterial für das Gehäuse 6.

**Bezugszeichenliste**

| | | | |
|---|---|---|---|
| 2 | Kabel | 60 | Ringsegment |
| 4 | Kabeleingang | 62 | Kontaktzunge |
| 6 | Gehäuse | 64 | Gegenbügel |
| 8 | Innenraum | r1, r2 | Radius |
| 10 | Kontaktelement | | |
| 12 | Leiterader | | |
| 14 | Aderisolierung | | |
| 16 | Abschirmung | | |
| 18 | Kabelmantel | | |
| 20 | Kontaktbügel | | |
| 20A | Kontaktabschnitt | | |
| 20B | Zugentlastungsabschnitt | | |
| 22 | Widerlager | | |
| 24 | Verschlusskappe | | |
| 26 | Dichtelement | | |
| 28 | Fixierelement | | |
| 30 | Schlitz | | |
| 32 | Schraube | | |
| 34 | Stützhülse | | |
| 36 | Mittenlängsachse | | |
| 38 | Anschlag | | |
| 40 | Kabelstutzen | | |
| 42 | zweiter Anschlag | | |
| 44 | Band | | |
| 46 | Rippe | | |
| 48 | Kodierausnehmung | | |
| 50 | Kodierrippe | | |
| 52 | Haltesteg | | |
| 54 | Rastnase | | |
| 56 | Rastausnehmung | | |
| 58 | Spalt | | |

## Patentansprüche

1. Einrichtung umfassend ein Gehäuse (6) und eine Vorrichtung zur elektrischen Kontaktierung einer Abschirmung (16) eines elektrischen Kabels (2) am Gehäuse (6), wobei die Vorrichtung einen Kontaktbügel (20), ein Widerlager (22), und eine Verschlusskappe (24) aufweist, wobei das Kabel (2) eine von einem Kabelmantel (18) umgebene Abschirmung (16) aufweist und im montierten Zustand durch einen Kabelstutzen (40) und einen Kabeleingang (4) des Gehäuses (6) hindurch in einen Innenraum (8) des Gehäuses (6) eingeführt ist, wobei das Kabel (2) zwischen dem im Gehäuse (6) im Innenraum (8) einliegenden Kontaktbügel (20) und dem Widerlager (22) geklemmt ist, wobei die Abschirmung (16) hierbei zwischen einer Stützhülse (34) und dem Kontaktbügel (20) geklemmt ist und wobei das Kabel (2) außenseitig des Gehäuses (6) von der Verschlusskappe (24) umgeben ist, die einerseits am Kabel (2) fixiert ist und andererseits am Kabelstutzen (40) des Gehäuses (6) befestigt ist, wobei der Kabeleingang (4) durch eine Öffnung in einer einteiligen Gehäusewandung des Gehäuses (6) ausgebildet ist und der Kabelstutzen (40) als ein einstückiges, rohrförmiges Teil des Gehäuses (6) einstückig mit der Gehäusewandung ausgebildet ist,
**dadurch gekennzeichnet, dass**
der Kontaktbügel (20) in Kabellängsrichtung zwei voneinander beabstandete Bügelabschnitte aufweist, nämlich einen Kontaktabschnitt (20A), in dem die Abschirmung (16) geklemmt ist sowie einen Zugentlastungsabschnitt (20B), in dem der Kabelmantel (18) geklemmt ist.

2. Einrichtung nach Anspruch 1, bei der die beiden Bügelabschnitte (20A, 20B) durch einen Schlitz (30) voneinander getrennt sind und unterschiedliche Radien (r1, r2) aufweisen.

3. Einrichtung nach einem der vorhergehenden Ansprüche, bei der das Widerlager (22) durch das Gehäuse (6) und nach Art einer Halbschale gebildet ist oder bei der das Widerlager (22) durch einen Gegenbügel (64) gebildet ist und die beiden Bügel (20, 64) eine das Kabel (2) klemmende Schelle bilden und die Schelle am Gehäuse (6) befestigt ist.

4. Einrichtung nach einem der vorhergehenden Ansprüche, bei der zumindest ein Ringsegment (60) um den Kabeleingang (4) zur elektrischen Abschirmung eines Spaltes (58) zwischen Kabel (2) und Kabeleingang (4) angeordnet ist.

5. Einrichtung nach Anspruch 4, bei der das Ringsegment (60) ein Teil des Kontaktbügels (20) ist und mehrere federnde Kontaktzungen (62) aufweist, die umlaufend um den Kabeleingang (4) am Gehäuse (6) anliegen.

6. Einrichtung nach einem der vorhergehenden Ansprüche, bei der am Widerlager (22) mindestens eine Rippe (46) angeformt ist, die zur Zugentlastung in den Kabelmantel (18) eingepresst ist.

7. Einrichtung nach einem der vorhergehenden Ansprüche, bei der am Widerlager (22) ein Axialanschlag (38) für das Kabel (2) ausgebildet ist.

8. Einrichtung nach einem der vorhergehenden Ansprüche, bei der der Kontaktbügel (20) durch eine asymmetrische Ausbildung ein Kodierelement (48) und das Gehäuse (6) korrespondierend hierzu ein komplementäres Kodierelement (50) für eine positionsrichtige Montage des Kontaktbügels (20) aufweisen.

9. Einrichtung nach einem der vorhergehenden Ansprüche, bei der der Kontaktbügel (20) über Schrauben (32) befestigt ist.

10. Einrichtung nach einem der vorhergehenden Ansprüche, bei der die Verschlusskappe (24) am Gehäuse (6) verrastet ist und einen halbschalenartig ausgebildeten Haltesteg (52) aufweist, welcher sich in Kabellängsrichtung erstreckt und wobei um den Haltesteg (52) und das Kabel (2) ein Fixierelement (28) gelegt ist, so dass das Kabel (2) über das Fixierelement (28) an der Verschlusskappe (24) mechanisch fixiert ist.

11. Einrichtung nach einem der vorhergehenden Ansprüche, bei der im Bereich des Kabeleingangs (4) ein Dichtelement (26) angeordnet ist.

12. Einrichtung nach dem vorhergehenden Anspruch, bei der der Kabelstutzen (40) im Vergleich zum Kabeleingang (4) einen vergrößerten Durchmesser aufweist, so dass ein zweiter Anschlag (42) ausgebildet ist, gegen den das Dichtelement (26) zum Anliegen kommen kann.

13. Einrichtung nach einem der vorhergehenden Ansprüche, bei der im Innenraum (8) ein Hochvolt-Verbraucher angeordnet ist, der über das Kabel (2) versorgt wird,

## Claims

1. Device comprising a housing (6) and an apparatus for making electrical contact with a shield (16) of an electrical cable (2) on the housing (6), wherein the apparatus has a contact clip (20), an abutment (22) and a closure cap (24), wherein the cable (2) has a shield (16), which is surrounded by a cable sheath (18), and in the mounted state is inserted into an interior (8) of the housing (6) through a cable connection piece (40) and a cable inlet (4) of the housing (6), wherein the cable (2) is clamped between the contact clip (20), which is situated in the interior (8) in the housing (6), and the abutment (22), wherein the shield (16) is clamped between a supporting sleeve (34) and the contact clip (20) here, and wherein the cable (2) is surrounded on the outside of the housing (6) by the closure cap (24) which, at one end, is fixed to the cable (2) and, at the other end, is fastened to the cable connection piece (40) of the housing (6), wherein the cable inlet (4) is formed by an opening in a unipartite housing wall of the housing (6), and the cable connection piece (40) is integrally formed with the housing wall as an integral, tubular part of the housing (6), **characterized in that** the contact clip (20) has, in the cable longitudinal direction, two clip sections which are spaced apart from one another, specifically a contact section (20A), in which the shield (16) is clamped, and a strain-relief section (20B), in which the cable sheath (18) is clamped.

2. Device according to Claim 1, in which the two clip sections (20A, 20B) are separated from one another by a slot (30) and have different radii (r1, r2).

3. Device according to either of the preceding claims, in which the abutment (22) is formed by the housing (6) and in the manner of a half-shell, or in which the abutment (22) is formed by a mating clip (64), and the two clips (20, 64) form a clamp which clamps the cable (2), and the clamp is fastened to the housing (6).

4. Device according to one of the preceding claims, in which at least one ring segment (60) is arranged around the cable inlet (4) for the purpose of electrically shielding a gap (58) between the cable (2) and the cable inlet (4).

5. Device according to Claim 4, in which the ring segment (60) is part of the contact clip (20) and has a plurality of resilient contact tongues (62) which bear against the housing (6) circumferentially around the cable inlet (4).

6. Device according to one of the preceding claims, in which at least one rib (46) is integrally formed on the abutment (22), which rib is pressed into the cable sheath (18) for strain-relief purposes.

7. Device according to one of the preceding claims, in which an axial stop (38) for the cable (2) is formed on the abutment (22).

8. Device according to one of the preceding claims, in which the contact clip (20), owing to an asymmetrical design, has a coding element (48) and the housing (6) has, corresponding thereto, a complementary coding element (50) for fitting the contact clip (20) in the correct position.

9. Device according to one of the preceding claims, in which the contact clip (20) is fastened by means of screws (32).

10. Device according to one of the preceding claims, in which the closure cap (24) is latched to the housing (6) and has a retaining web (52) which is designed in the form of a half-shell and which extends in the cable longitudinal direction, and wherein a fixing element (28) is placed around the retaining web (52) and the cable (2), so that the cable (2) is mechanically fixed to the closure cap (24) by means of the fixing element (28) .

11. Device according to one of the preceding claims, in which a sealing element (26) is arranged in the region of the cable inlet (4).

12. Device according to the preceding claim, in which the cable connection piece (40) has an enlarged diameter in comparison to the cable inlet (4), so that a second stop (42) is formed, it being possible for the sealing element (26) to come to bear against the said second stop.

13. Device according to one of the preceding claims, in which a high-voltage load which is supplied with power via the cable (2) is arranged in the interior (8) .

## Revendications

1. Ensemble comprenant un boîtier (6) et un dispositif pour mettre en contact électrique un blindage (16) d'un câble électrique (2) avec un boîtier (6), dans lequel le dispositif comporte un étrier de contact (20), une butée (22) et un capuchon de fermeture (24), dans lequel le câble (2) comporte un blindage (16) entouré d'une gaine de câble (18) et est inséré à l'état monté à travers une douille de câble (40) et une entrée de câble (4) du boîtier (6) dans un espace intérieur (8) du boîtier (6), dans lequel le câble (2) est serré entre l'étrier de contact (20) inséré dans le boîtier (6) dans l'intérieur (8) et la butée (22), dans lequel le blindage (16) est serré entre un manchon de support (34) et l'étrier de contact (20) et dans lequel le câble (2) est entouré à l'extérieur du boîtier (6) par un capuchon de fermeture (24) qui est fixé d'une part au câble (2) et d'autre part à la douille de câble (40) du boîtier (6), dans lequel l'entrée de câble (4) est réalisée par une ouverture ménagée dans une paroi de boîtier en une seule pièce du boîtier (6) et la bride de raccordement de câble (40) est réalisée sous la forme d'une partie tubulaire en une seule pièce du boîtier (6) solidaire de la paroi du boîtier, **caractérisé en ce que** l'étrier de contact (20) comporte deux parties d'étrier espacées dans la direction longitudinale du câble, à savoir une partie de contact (20A) dans laquelle le blindage (16) est serré et une partie de décharge de traction (20B) dans laquelle la gaine de câble (18) est serrée.

2. Ensemble selon la revendication 1, dans lequel les deux parties d'étrier (20A, 20B) sont séparées l'une de l'autre par une fente (30) et ont des rayons différents (r1, r2).

3. Ensemble selon l'une des revendications précédentes, dans lequel la butée (22) est formée par le boîtier (6) et à la manière d'une demi-coque ou dans lequel la butée (22) est formée par un contre-étrier (64) et les deux étriers (20, 64) forment une bride serrant le câble (2) et la bride est fixée au boîtier (6) .

4. Ensemble selon l'une des revendications précédentes, dans lequel au moins un segment annulaire (60) est disposé autour de l'entrée de câble (4) pour blinder électriquement un interstice (58) entre le câble (2) et l'entrée de câble (4).

5. Ensemble selon la revendication 4, dans lequel le segment annulaire (60) fait partie de l'étrier de contact (20) et comporte plusieurs languettes de contact élastiques (62) qui s'étendent circonférentiellement autour de l'entrée de câble (4) sur le boîtier (6).

6. Ensemble selon l'une des revendications précédentes, dans lequel au moins une nervure (46), qui est emboutie dans la gaine de câble (18) pour la décharge de traction, est formée sur la butée (22).

7. Ensemble selon l'une des revendications précédentes, dans lequel une butée axiale (38) destinée au câble (2) est formée sur la butée (22).

8. Ensemble selon l'une des revendications précédentes, dans lequel l'étrier de contact (20) comporte un élément de codage (48) du fait d'une forme asymétrique et le boîtier (6) comporte un élément de codage complémentaire (50) correspondant à celui-ci pour monter l'étrier de contact (20) dans la position correcte.

9. Ensemble selon l'une des revendications précédentes, dans lequel l'étrier de contact (20) est fixé par des vis (32).

10. Ensemble selon l'une des revendications précédentes, dans lequel le capuchon de fermeture (24) est encliqueté sur le boîtier (6) et comporte une nervure de retenue (52) en forme de demi-coque, qui s'étend dans la direction longitudinale du câble et dans lequel un élément de fixation (28) est placé autour de la nervure de retenue (52) et du câble (2) de manière à ce que le câble (2) soit fixé mécaniquement au capuchon de fermeture (24) par l'intermédiaire de l'élément de fixation (28).

11. Ensemble selon l'une des revendications précédentes, dans lequel un élément d'étanchéité (26) est disposé dans la zone de l'entrée de câble (4).

12. Ensemble selon la revendication précédente, dans lequel la douille de câble (40) présente un diamètre supérieur à celui de l'entrée de câble (4), de manière à former une seconde butée (42) contre laquelle l'élément d'étanchéité (26) peut appuyer.

13. Ensemble selon l'une des revendications précédentes, dans lequel il est prévu dans l'espace intérieur (8) une charge à haute tension qui est alimentée par le câble (2).
